# EUROPEAN PATENT APPLICATION

(11) **EP 2 735 939 A2**
(43) Date of publication of application: **28.05.2014**
(21) Application number: 13173905.4
(22) Date of filing: 27.06.2013
(51) Int. Cl.: G06F 3/02

(54) **Keyboard**

(30) Priority: 15.11.2012 TW 101142688
(71) Applicant: Giga-Byte Technology Co., Ltd., New Taipei City 231 (TW)
(72) Inventor: Lin, Yin Yu, 231 Taiwan (TW); Huang, Haw Kae, 231 Taiwan (TW)
(74) Representative: Schwerbrock, Florian

(57) **Abstract**

A keyboard is used for operating an electronic device, wherein an operation system of the electronic device has a plurality of graphical user interfaces. The keyboard includes a main body, a plurality of keycaps, a circuit board and an interface switching button, wherein the keycaps and the interface switching button are disposed on the body and move along up and down directions with respect to the main body when pressed. The circuit board is disposed inside the main body, and the circuit board is electrically provided with a plurality of trigger switches and a controller. When the trigger switches are triggered by the corresponding keycaps, the controller outputs an operating signal to the electronic device. When the corresponding trigger switch is triggered by the interface switching button, the controller outputs a switching signal to the electronic device, so as to switch and execute one of the user interfaces. Besides, the objective of the present invention is to switch different user interfaces on the operation system via operating the function switching button.

## Description

### BACKGROUND OF THE INVENTION

### Field of Invention

The invention relates to a keyboard, and more particularly to a keyboard which switches different user interfaces of an operation system.

### Related Art

As remarkable advances of technology, the popularity of smart phones, tablets, and many types of information appliances is driving the demand of common touch panels for portable and functional electronics in replacement of conventional keyboards. Also, Graphical User Interface (GUI) that allows users to interact with electronic devices using images rather than text commands has been introduced into the operating system of the computers for example. A user may operate the touch panel to make selections or move a cursor by simply touching the display surface via a finger or stylus pen. In this way, the computer interprets the touch and thereafter performs an action based on the touch event such as switching between different GUIs.

It should be noted that the event of switching between different GUIs is distinct from that of flipping pages of an electronic book or file. The former refers to a change or switch from a first operating system in conjunction with a first GUI to a second operating system in conjunction with a second GUI, while the latter refers to a browse through a single electronic file.

As prior art, a virtual keyboard will be shown on the display of the touch panel for the user to input characters, symbols, or the like. However, it is almost impossible for the virtual keyboard to provide a similar sense of touch to the real keyboard, and it occurs frequently for the user to make mistakes in typing since the finger often blocks his view. Therefore, significant part of users prefers substantial keyboards.

Besides, although the operating systems of the laptop PC or the desktop PC are GUI-based, the touch panel technology has not been combined therewith commercially. Hence, keyboards are still used as the main input devices for laptop or desktop PCs.

However, the conventional keyboard still cannot, for example, switch directly, promptly, and intuitively between different operating systems in conjunction with respective user interfaces in the same way as the control panel, which is not convenient for the user and needs further improvement.

In view of the foregoing prior art defect, the objective of the present invention is to provide a keyboard to resolve the problems of the used keyboard failing to switch different GUIs as the touched-panel mode.

The present invention is provided with a keyboard being applicable to an electronic device, and an operation system of the electronic device has a plurality of user interfaces. The keyboard comprises a main body, a plurality of keycaps, a circuit board (Printed Circuit Board) and at least one interface switching button, wherein the keycaps are disposed respectively on the main body and move along up and down directions with respect to the main body when pressed. The circuit board is disposed inside the main body and electrically provided with a plurality of trigger switches and a controller configured for outputting an operating signal to the electronic device when one of the trigger switches is triggered. When at least one of the trigger switches is triggered by the corresponding keycaps, the controller outputs an operating signal to the electronic device. The interface switching button is disposed on the main body to move along an up and down direction with respect to the main body when pressed and corresponding to one of the trigger switches. When the corresponding trigger switch is triggered by the interface switching button, the controller outputs a switching signal to the electronic device, so as to switch and execute one of the user interfaces.

The present invention is further provided with a keyboard being applicable to an electronic device, and an operation system of the electronic device has a plurality of user interfaces. The keyboard comprises a main body, a plurality of keycaps, a circuit board (Printed Circuit Board) and a function switching button, wherein the keycaps are disposed respectively on the main body and move along up and down directions with respect to the main body when pressed. The circuit board is disposed inside the main body and electrically provided with a plurality of trigger switches corresponding to the keycaps respectively and a controller configured for outputting an operating signal to the electronic device when one of the trigger switches is triggered. When the trigger switches are triggered by the corresponding keycaps, the controller outputs an operating signal to the electronic device. The function switching button is disposed on the main body to move along an up and down direction with respect to the main body when pressed and corresponding to one of the trigger switches. When the corresponding trigger switch is triggered by the function switching button, and one of the keycaps is once pressed at the same time to trigger the corresponding trigger switch, the controller outputs a switching signal to the electronic device, so as to switch and execute one of the user interfaces.

The objective of the present invention is to add the interface switching button or the function switching button to the keyboard, and to embed the firmware of switching user interfaces into the controller as the touched-panel mode. By means of integrating the hardware and the firmware, the users can rapidly switch different user interfaces via pressing the interface switching button or the function switching button of the keyboard.

A detailed description is given in the following embodiments with reference to the accompanying drawings.

### BRIEF DESCRIPTION OF THE DRAWINGS

The invention can be more fully understood by referring to the following detailed description and examples with references made to the accompanying drawings, wherein:
Fig. 1 is the block diagram of the first embodiment of a keyboard applicable to an electronic device according to the present invention.
Fig. 2 is the plan diagram of the first embodiment of a keyboard according to the present invention.
Fig. 3 is the function block diagram of the first embodiment of a keyboard according to the present invention.
Fig. 4A is the plan diagram of another mode of the first embodiment of a keyboard according to the present invention.
Fig. 4B is the plan diagram of another mode of the first embodiment of a keyboard according to the present invention.
Fig. 5 is the block diagram of the second embodiment of a keyboard according to the present invention.
Fig. 6 is the plan diagram of the second embodiment of a keyboard according to the present invention.
Fig. 7 is the function block diagram of the second embodiment of a keyboard according to the present invention.

### DETAIL DESCRIPTION OF THE INVENTION

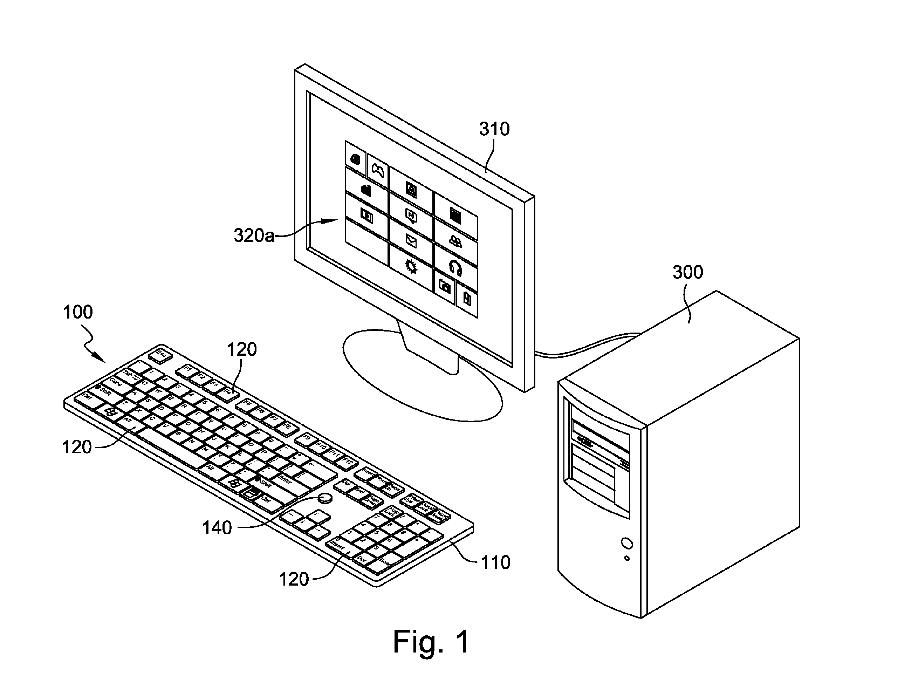

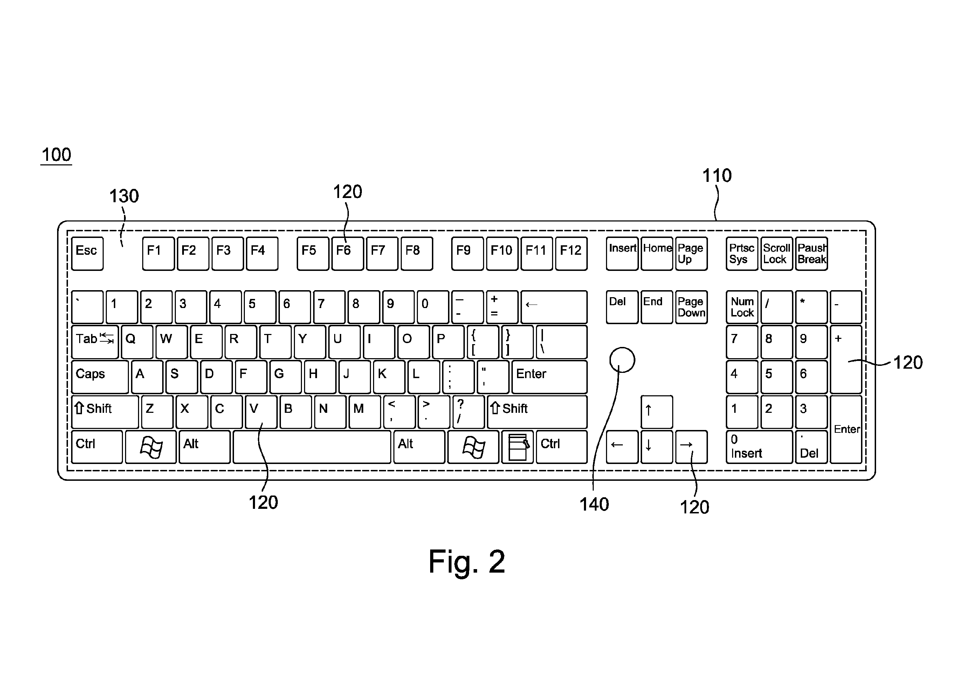

Fig. 1 to Fig. 3 are the schematic diagrams of the first embodiment of a keyboard according to the present invention. As shown in the first embodiment, the keyboard 100 is used for an operation input interface of an electronic device 300, and the electronic device 300 has a monitor 310 showing current working status of an operation system. Therefore, it is convenient for users to operate and control via the monitor 310, and the operation system of the electronic device 300 is further provided with a plurality of user interfaces 320, such as a first user interface 320a, a second user interface 320b and the like, wherein the monitor 310 includes but not limited to a LCD (Liquid Crystal Display) or a touch panel.

In addition, the keyboard 100 according to the embodiments of the present invention is applicable to various electronic devices 300, which includes but not limited to a cell phone, a tablet PC, a laptop PC or a desktop PC, and the operation system of the electronic device 300 is configured of system architectures of the user interfaces 320a, 320b and the like, which are graphical user interfaces and comprise a plurality of icons. The users can switch different user interfaces 320a, 320b by means of the keyboard 100, and display the selected user interface on the monitor 310, and then click the wanted icons of said selected user interface, such as the first user interface 320a, via a mouse, or further touch the wanted icons of the current user interface, such as the first user interface 320a, via a finger directly. Therefore, an application program corresponding to the clicked/touched icon is executed no matter via the mouse or finger.

The following description is taken a desktop PC as the best-contemplated mode of carrying out the invention. This description is made for the purpose of illustrating the general principles of the invention and should not be taken in a limiting sense. The scope of the invention is best determined by reference to the appended claims.

As shown in Fig. 1 to Fig. 3, the keyboard 100 comprises a main body 110, a plurality of keycaps 120, a circuit board (Printed Circuit Board) 130 and an interface switching button 140, wherein the main body 110 is provided with a hollow internal accommodating space, and the keycaps 120 which are disposed respectively and distributed regularly in terms of "QWERTY" keyboard rule on the main body 110 move along up and down directions with respect to the main body when pressed. The circuit board 130 is disposed inside the main body 110 and electrically provided with a plurality of trigger switches 131 corresponding to the keycaps 120 respectively and a controller 132 configured for outputting an operating signal to the electronic device 300 when one of the trigger switches 131 is triggered.

When the users press at least one keycap 120, the keycap 120 is forced to shift downwards and suppresses to trigger the corresponding trigger switches 131 to generate a trigger signal to the controller 132, the controller 132 judges which predetermined functionality of the received trigger signal is by its firmware, and further outputs an corresponding operating signal to the electronic device 300, so as to execute the predetermined functionality on the operation system of the electronic device 300. The present invention is exemplified with that the controller 132 is a MCU (Microcontroller Unit) which can be functioned to rapidly execute the memory and estimation, but should not be taken in a limiting sense.

It's worth noting that the keyboard 100 according to the present invention can output the operating signal to the electronic device 300 by ways of wired or wireless transmission. Furthermore, the present invention discloses that the keycaps 120 trigger the corresponding trigger switches 131 and the controller 132 outputs the corresponding operating signal via the trigger signal of the trigger switches 131, which is similar to the signal processing of the keyboard current existing. On the other hand, the keycaps 120 revert automatically to the original unforced position via an elastic pad of the main body 110 after the pressed force is released, which is also similar to the mechanism of the keyboard current existing.

As shown in Fig. 1 to Fig. 3, the interface switching button 140 is disposed on the main body 110 to move along an up and down direction with respect to the main body 110 when pressed and corresponding to one of the trigger switches 131. When the operating system in conjunction with the user interface 320 of the electronic device 300 is intended to be changed, the interface switching button 140 is pressed to trigger the corresponding trigger switch 131, a trigger signal is generated in response and transmitted to the controller 132. At the same time, the controller 132 converts the trigger signal to a signal instruction for switching the different user interfaces 320a, 320b, and further outputs an corresponding switching signal to the electronic device 300, so as to switch different user interfaces 320a, 320b and the like of the operation system. The users can further touch/click the current user interface by means of a touched or a pointing apparatus, such as the icons of the second user interface 320b, so as to execute the corresponding application program.

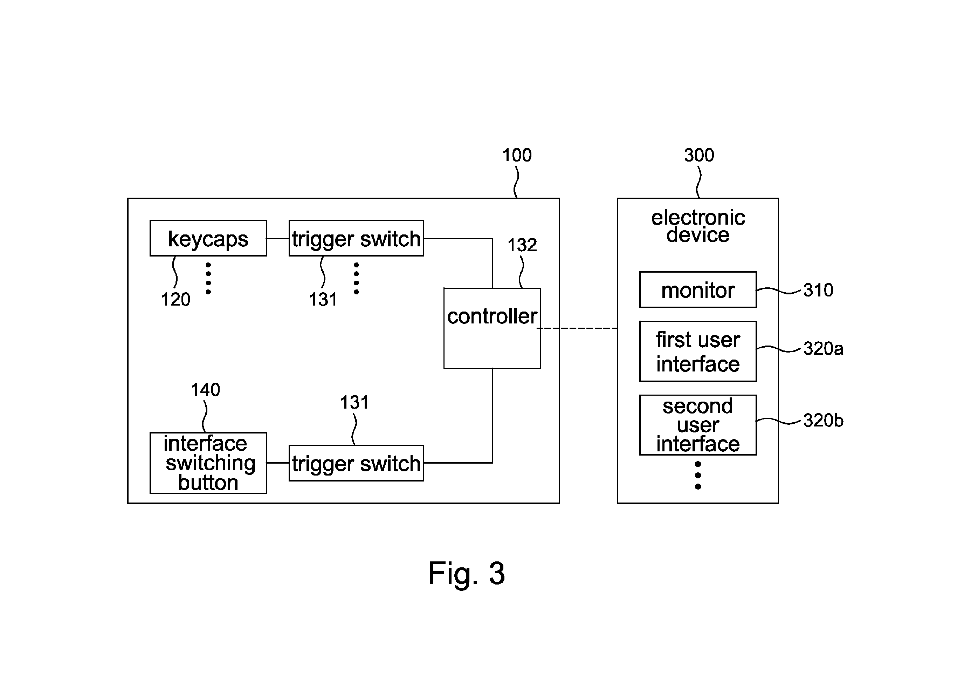

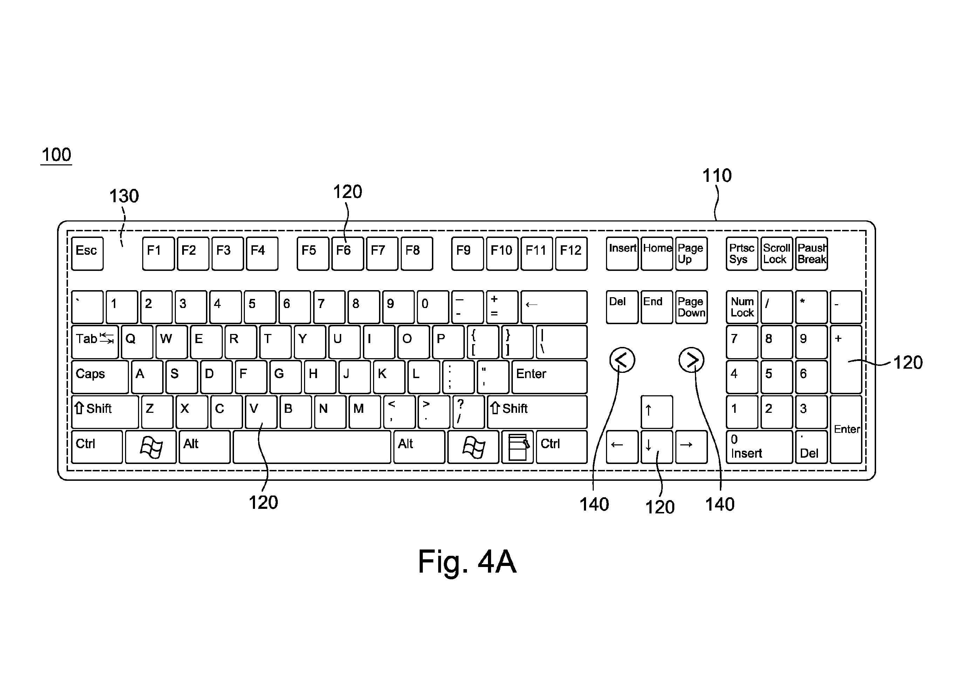

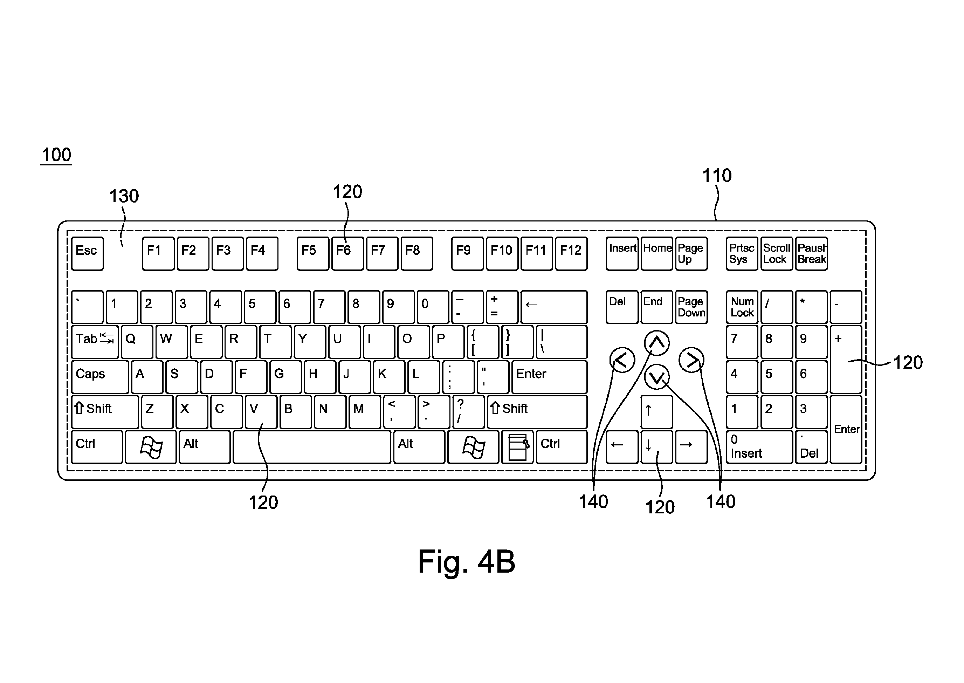

Fig. 4A and Fig. 4B are the plan diagrams of another mode of the first embodiment of a keyboard according to the present invention. As shown in Fig. 3, the present invention is exemplified with two interface switching buttons 140 (as Fig. 4A shown) corresponding respectively to the two trigger switches 131 of the circuit board 130, and the switching signals corresponding to the two interface switching buttons 140 in Fig. 4A are composed of different switching directions. That is, one switching signal corresponding to one of the two interface switching buttons 140 controls the operation system of the electronic device 300 to switch to another user interface by horizontal sliding (toward the left direction), such as inputting a horizontal sliding control instruction to the electronic device 300 and switching the present first user interface 320a to the second user interface 320b. Besides, the switching signal corresponding to another interface switching buttons 140 controls the operation system of the electronic device 300 to switch to another user interface by horizontal sliding (toward the right direction), such as inputting a horizontal sliding control instruction to the electronic device 300 and switching the present first user interface 320b to the second user interface 320a.

Moreover, as shown in Fig. 4B, the present invention is exemplified with four interface switching buttons 140 corresponding respectively to the four trigger switches 131 of the circuit board 130, and the switching signals corresponding to the four interface switching buttons 140 in Fig. 4B are also composed of different switching directions. That is, the switching signals corresponding to the four interface switching buttons 140 are to input a horizontal sliding or a vertical sliding control instruction to the electronic device 300 and control the operation system of the electronic device 300 to switch to different user interfaces by upward, downward, leftward and rightward sliding.

To be emphasized is that the present invention is exemplified with various quantities of the interface switching buttons 140 to enhance the convenience of switching different user interfaces 320 for the users.

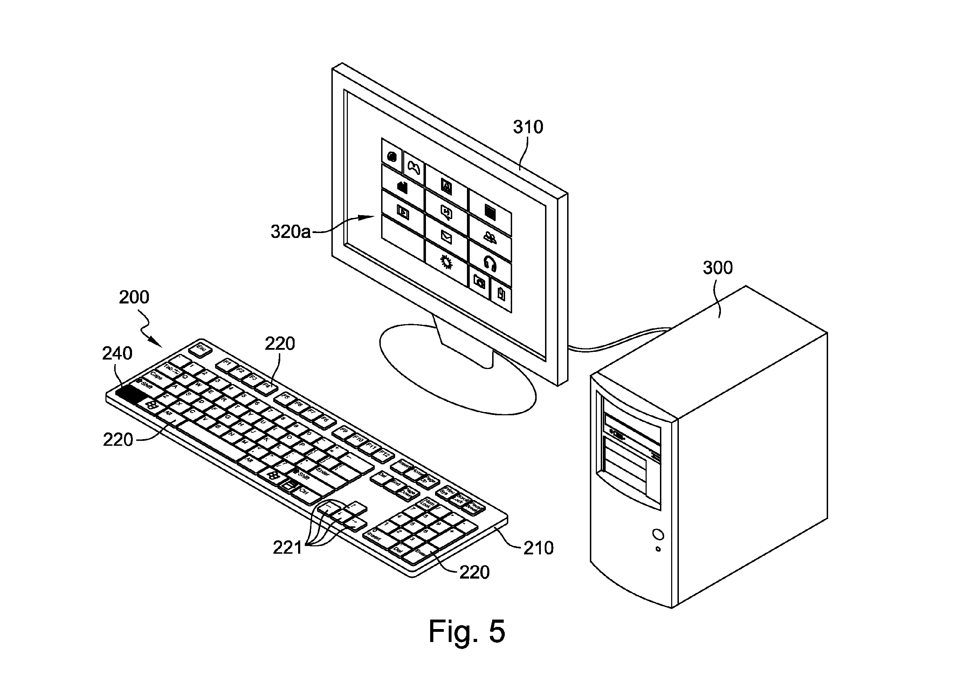

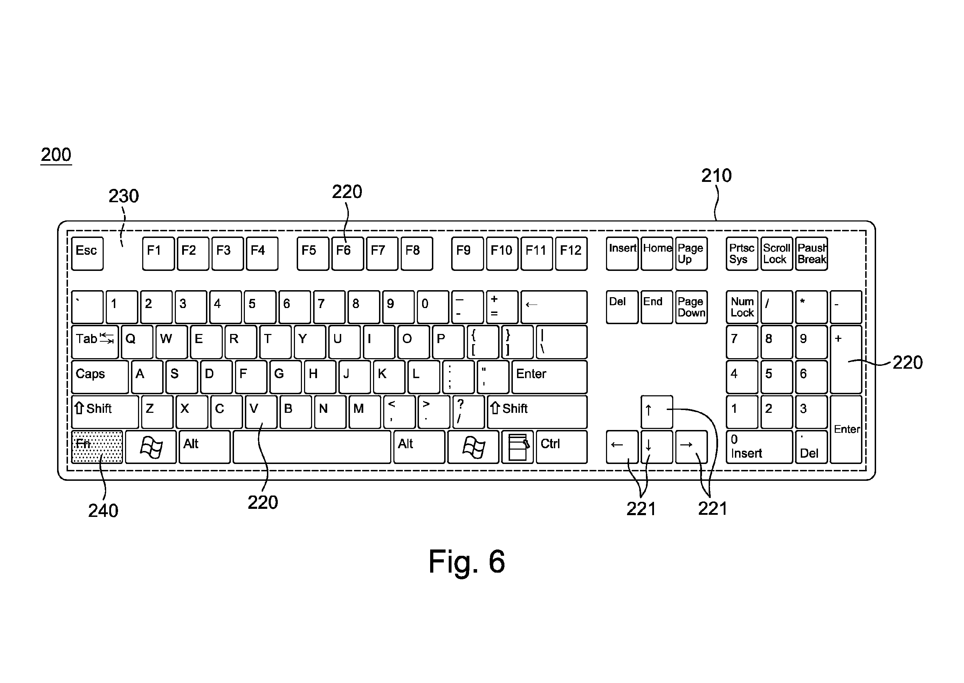

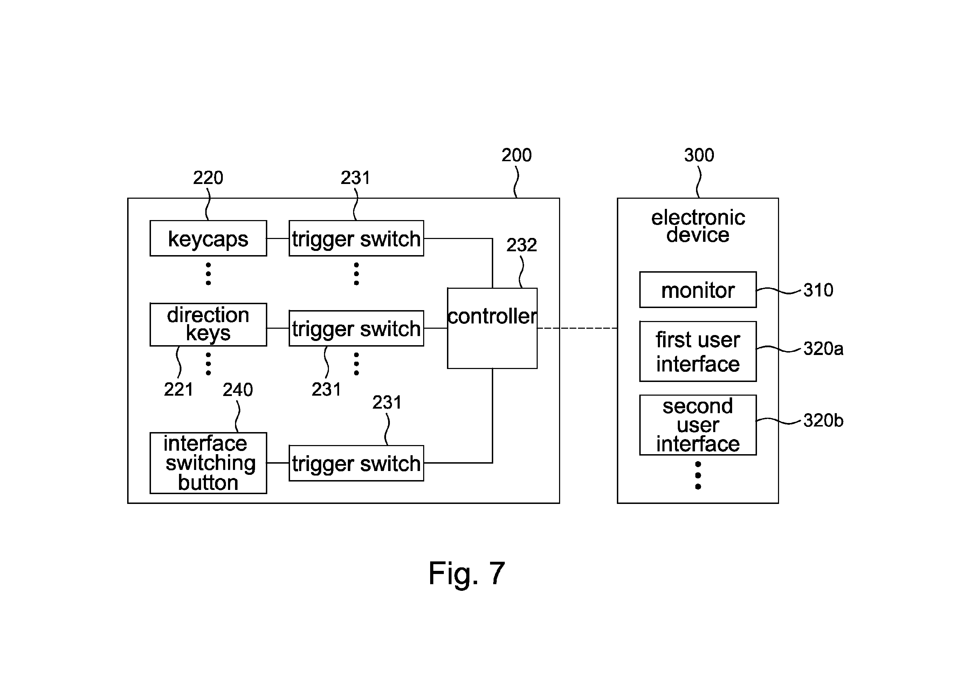

Please refer to Fig. 5 to Fig. 7, a keyboard 200 of a second embodiment according to the present invention, comprises a main body 210, a plurality of keycaps 220, a circuit board (Printed Circuit Board) 230 and a function switching button 240, wherein the main body 210 is provided with a hollow internal accommodating space, and the keycaps 220 which are disposed respectively and distributed regularly in terms of "QWERTY" keyboard rule on the main body 210 move along up and down directions with respect to the main body 210 when pressed. Moreover, the keycaps 220 further contain a plurality of direction keys 221. The circuit board 230 is disposed inside the main body 210 and electrically provided with a plurality of trigger switches 231 corresponding to the keycaps 120 respectively and a controller 232 configured for outputting an operating signal to the electronic device 300 when one of the trigger switches 231 is triggered.

When the users press at least one keycap 220, the keycap 220 is forced to shift downwards and suppresses to trigger the corresponding trigger switches 231 to generate a trigger signal to the controller 232, the controller 232 judges which predetermined functionality of the received trigger signal is by its firmware, and further outputs an corresponding operating signal to the electronic device 300, so as to execute the predetermined functionality on the operation system of the electronic device 300. The present invention is exemplified with that the controller 232 is a MCU (Microcontroller Unit) which can be functioned to rapidly execute the memory and estimation, but should not be taken in a limiting sense.

It's worth noting that the keyboard 200 according to the present invention can output the operating signal to the electronic device 300 by ways of wired or wireless transmission. Furthermore, the present invention discloses that the keycaps 220 trigger the corresponding trigger switches 231 and the controller 232 outputs the corresponding operating signal via the trigger signal of the trigger switches 231, which is similar to the signal processing of the keyboard current existing. On the other hand, the keycaps 220 revert automatically to the original unforced position via an elastic pad of the main body 210 after the pressed force is released, which is also similar to the mechanism of the keyboard current existing.

As shown in Fig. 5 to Fig. 7, the function switching button 240 is disposed on the main body 210 to move along an up and down direction with respect to the main body 210 when pressed and corresponding to one of the trigger switches 231. When the operating system in conjunction with the user interface 320 of the electronic device 300 is intended to be changed, the function switching button 240 is pressed to trigger the corresponding trigger switch 231, a first trigger signal is generated in response and transmitted to the controller 232. At the same time, a certain keycap 220 has to be pressed to trigger the corresponding trigger switch 231 and then generate and transmit a second trigger signal to the controller 232. After receiving the first and second trigger signals generated by the function switching buttons 240 and the keycap 220, the controller 132 combines the two trigger signals to a signal instruction for switching the different user interfaces 320a, 320b, and further outputs an corresponding switching signal to the electronic device 300, so as to switch different user interfaces 320a, 320b and the like of the operation system. The users can execute the present user interface, such as the icons of the first user interface 320a.

In addition, the keyboard 200 is more convenient for the users because the function switching buttons 240 further associate with the certain keycaps 220, such as the direction keys 221, and when the function switching buttons 240 and any direction keys 221 are pressed at the same time, such that the controller 232 is controlled to output switching signals of different switching directions (such as horizontal or vertical) to the electronic device 300, so as to control the operation system to switch different user interfaces upward, downward, leftward and rightward respectively.

While the invention has been described by way of example and in terms of the preferred embodiments, it is to be understood that the invention is not limited to the disclosed embodiments. To the contrary, it is intended to cover various modifications and similar arrangements. Therefore, the scope of the appended claims should be accorded the broadest interpretation so as to encompass all such modifications and similar arrangements.

## Claims

1. A keyboard (100) for an electronic device (300) that includes an operation system having a plurality of user interfaces (320), the keyboard (100) **characterized by** comprising:
a main body (110) ;
a plurality of keycaps (120) disposed respectively on the main body (110) to
move along up and down directions with respect to the main body (110) when pressed;
a circuit board (130) disposed inside the main body (110) and electrically
provided with a plurality of trigger switches (131) corresponding to the keycaps (120) respectively and a controller (132) configured for outputting an operating signal to the electronic device (300) when one of the trigger switches (131) is triggered; and
an interface switching button (140) disposed on the main body (110) to move
along an up and down direction with respect to the main body (110) when pressed and corresponding to one of the trigger switches (131), wherein when the trigger switch (131) corresponding to the interface switching button (140) is triggered by the interface switching button (140), the controller (132) outputs a switching signal to the electronic device (300) for switching to and executing one of the user interfaces (320).

2. The keyboard (100) as claimed in claim 1, further comprising a plurality of interface switching buttons (140) disposed on the main body (110) and corresponding respectively to the trigger switches (131), and the switching signals corresponding to the interface switching buttons (140) respectively comprise an instruction of switching to one of the user interfaces (320) in different directions.

3. The keyboard (100) as claimed in claim 2, wherein when the electronic device (300) receives an instruction of horizontal sliding or vertical sliding, the operation system performs the horizontal sliding or vertical sliding correspondingly to switch to one of the user interfaces (320).

4. The keyboard (100) as claimed in claim 1, wherein each of the user interfaces (320) comprises a plurality of icons associated with a plurality of application programs respectively, and when one of the icons is clicked, the associated application program is executed.

5. The keyboard (100) as claimed in claim 1, wherein the user interfaces (320) are graphical user interfaces.

6. A keyboard (100) for an electronic device (300) that includes an operation system having a plurality of user interfaces (320), the keyboard (100) **characterized by** comprising:
a main body (110);
a plurality of keycaps (120) disposed respectively on the main body (110) to
move along up and down directions with respect to the main body (110) when pressed;
a circuit board (130) disposed inside the main body (110) and electrically
provided with a plurality of trigger switches (131) corresponding to the keycaps (120) respectively and a controller (132) configured for outputting an operating signal to the electronic device (300) when one of the trigger switches (131) is triggered; and
an function switching button (240) disposed on the main body (110) to move
along an up and down direction with respect to the main body (110) when pressed and corresponding to one of the trigger switches (131), wherein when the trigger switch (131) corresponding to the function switching button (240) is triggered by the function switching button (240), the controller (132) outputs a switching signal to the electronic device (300) for switching to and executing one of the user interfaces (320).

7. The keyboard (100) as claimed in claim 6, wherein the function switching button (240) associates with the keycaps (120) and triggers the corresponding trigger switch (131) at the same time, such that the controller (132) outputs the switching signal of different switching directions.

8. The keyboard (100) as claimed in claim 7, wherein when the electronic device (300) receives an instruction of horizontal sliding or vertical sliding, the operation system performs the horizontal sliding or vertical sliding correspondingly to switch to one of the user interfaces (320).

9. The keyboard (100) as claimed in claim 6, wherein each of the user interfaces (320) comprises a plurality of icons associated with a plurality of application programs respectively, and when one of the icons is clicked, the associated application program is executed.

10. The keyboard (100) as claimed in claim 6, wherein the user interfaces (320) are graphical user interfaces.
